Europäisches Patentamt

European Patent Office

Office européen des brevets

(11) Publication number: **0 514 844 A1**

# EUROPEAN PATENT APPLICATION

(21) Application number: **92108445.5**

(22) Date of filing: **19.05.92**

(51) Int. Cl.5: **C09D 7/00**

(30) Priority: **20.05.91 JP 114738/91**
**13.12.91 JP 330589/91**

(43) Date of publication of application:
**25.11.92 Bulletin 92/48**

(84) Designated Contracting States:
**AT BE CH DE DK ES FR GB GR IT LI LU NL SE**

(71) Applicant: **Nasu, Atsushi**
**99 Katako**
**Youkaichiba-shi Chiba-ken(JP)**

(72) Inventor: **Nasu, Atsushi**
**99 Katako**
**Youkaichiba-shi Chiba-ken(JP)**

(74) Representative: **Hansen, Bernd, Dr.**
**Dipl.-Chem. et al**
**Hoffmann, Eitle & Partner Patent- und**
**Rechtsanwälte Arabellastrasse 4 Postfach**
**81 04 20**
**W-8000 München 81(DE)**

(54) **Water-based solvent for paint and production thereof.**

(57) Disclosed herein is an aqueous solvent that can be used for a variety of paints to minimize the usage of organic solvents. It is produced by the process which comprises treating seawater with a specific acid to lower its pH value and then with an alkali agent to raise its pH value, thereby causing salt to precipitate, separating the salt and concentrating the remaining seawater to give concentrated saline, mixing and reacting the salt with a calcium compound composed mainly of calcium oxide and a petroleum solvent in two steps, and dissolving the reaction product in water and collecting the supernatant liquid.

EP 0 514 844 A1

BACKGROUND OF THE INVENTION

1. Field of the Invention:

The present invention relates to a paint solvent and more particularly to a paint solvent which can be used for paints of all kinds. including oil-, acrylic-, and epoxy-based ones.

2. Description of the Prior Art:

Paint usually consists of three principal components, film-former (vehicle solids), pigment and solvent. According to the type of vehicle solids, paints are classified into oil-based paint, cellulose derivative paint, phenolic resin paint, acrylic resin paint, epoxy resin paint, polyurethane resin paint, emulsion paint, water-soluble synthetic resin paint, etc. Except for the last two, they contain an organic solvent as the solvent. For example, oil-based paint contains a petroleum solvent and epoxy-based paint contains an aromatic solvent such as benzene and toluene. The organic solvent accounts for about 40 - 50% of the paint and functions to control the paint viscosity for the desired coating and film-forming performance. However, since organic solvents are mostly released into the atmosphere after painting, there has arisen a demand for a substitute for them from the view point of material saving and environmental protection.

The present inventors had proposed before a paint solvent of calcium ion water having a high pH value (Japanese Patent Laid-Open No. 174279/1987, USP No. 4,946.888). This is based on their discovery that the calcium ion water dissolves oil-based paints without changing them and provides good application properties and that it can be used for a variety of paints (including acrylic resin and epoxy resin paints) as well as oil-based paints if seawater is used for its solvent.

This paint solvent greatly reduces the amount of organic solvents required and makes paints suitable for quick drying and easy application. However, its extremely high pH makes paints of some kind to increase in viscosity to such an extent as to hinder uniform mixing. Moreover, it involves difficulties of using seawater as such in its preparation.

SUMMARY OF THE INVENTION

The present invention was completed to address the foregoing problems involved in the conventional paint solvent. It is an object of the present invention to provide an aqueous solvent that can be used for a variety of paints so as to eliminate or minimize the use of organic solvents. It is another object of the present invention to provide a paint solvent which can be prepared easily anywhere according to need.

DESCRIPTION OF THE PREFERRED EMBODIMENTS

According to the present invention, the paint solvent is an aqueous solution formed by dissolving in water a mixture which is a reaction product of salt obtained from seawater, a calcium compound composed mainly of calcium oxide, and an oily substances.

The salt obtained from seawater is the residue (composed mainly of sodium chloride) which is left after desalination of seawater. It may be used as such. However, it is desirable to use the salt which is obtained by the desalination process proposed by the present inventors (in Japanese Patent Laid-Open Nos. 47492/1989 and 221107/1990, USP No. 4,956,157). In short, this process consists of treating seawater with an acid containing sulfate ions (thereby lowering the pH of seawater) and treating seawater again with an alkali such as sodium hydroxide (thereby raising the pH of seawater and causing salt to precipitate), separating the salt, and concentrating the remaining saline until a desired concentration and a high pH are reached, cooling the saline (thereby causing salt to precipitate), and separating the salt to collect remaining Saline. The first salt, the first saline, and the second saline are used. Although the first saline may be used as such, it is also possible to dry it beforehand and dissolve the dried matter in water when the paint solvent of the present invention is prepared. The salt obtained from seawater in the above-mentioned manner contains sodium ions as well as various kinds of metal ions such as potassium, magnesium, silicon, lithium, iron and aluminum. It is thought that these metal ions permit vehicle solids to dissolve or disperse readily in water at a high pH value. It is also expected that the first salt is suitable particularly for epoxy resin-based paints because of its high specific gravity (about 1.15 - 1.25) and high chlorine content.

According to the present invention, the paint solvent contains a calcium compound composed mainly of calcium oxide. This means that the content of calcium oxide should be at least 40% by weight, preferably at least 50% by weight, with regard to the calcium compound. It raises the pH of the paint solvent and causes

2

EP 0 514 844 A1

the paint solvent to react with kerosene (mentioned later), making the kerosene readily soluble in water. The calcium compound such as this is prepared by calcining naturally occurring lime at a high temperature. The calcium compound preferably includes several % to about 50% of calcium compound which contains calcium phasphates, such as calcined shells or bones. Calcium phosphate facilitates the pH adjustment and permits uniform mixing with a paint without raising the viscosity appreciably.

According to the present invention, the paint solvent contains an oily substance, which is intended to facilitate uniform mixing of the paint solvent with a paint. It is thought that the oily substance reacts with the calcium oxide to modify itself so that it partly dissolves or disperse in water, and this results in an introduction of lipophilic groups into water. The oily substance may be in the form of either liquid or solid. It includes hydrocarbon oils (such as kerosene and petroleum oil) having a comparatively high boiling point and unsaturated fatty acids (such as animal oils). Furthermore, alcohols such as methanol, ethanol, propanol, butanol or higher molecular alcohols, esters or ketones in addition to aliphatic oils and aromatic oils such as benzene, toluene, xylene, used for conventional paint solvents, can be used as oily substance.

According to the present invention, the paint solvent may be prepared by directly mixing and reacting the salt obtained from seawater, the calcium compound composed mainly of calcium oxide, and the oily substance and dissolving the mixture of reaction products in water. Alternatively, it may be prepared in the following manner in the case where the salt obtained from seawater is the combination of the above-mentioned first salt (designated as salt (a)) and the second high pH saline (designated as saline (b)). First, an oily substance and salt (a) are mixed with each other in the ratio of from about 7:10 to about 7:13 (by weight), and the resulting mixture is mixed and reacted with a calcium compound in the ratio of from about 1:1 to about 3:1 (by weight). Secondly, the reaction product (A) obtained in the first step is mixed with a calcium compound in the ratio of from about 1:3 to about 1:2 (by weight), and the resulting mixture (B) is reacted with saline (b) in the ratio of from about 1:1 to about 3:1 (by weight). Finally, the resulting mixture/reaction product (C) is dissolved in water. (The mixture/reaction product will dissolve partly (about 10 - 20%) in water but will remain partly undissolved. The supernatant liquid is used as the paint solvent.)

The two-step reaction has an advantage over the single-step reaction in that the three components thoroughly get into water and hence the resulting paint solvent is superior in paint dissolving ability, application (coating) property, and quick drying property. There is an alternative way which consists of adding salt (a) to saline (b), mixing and reacting an oily substance and calcium compound with the mixture of salt (a) and saline (b), and dissolving the resulting mixture/reaction product in water.

The mixture/reaction product (C) may be dissolved in seawater which has been acidified and alkalized and then left after the separation of precipitates (salt (a)). (This seawater is saline (b) to be concentrated afterward.) In this case, the mixture/reaction product (C) should be added with stirring in an amount of about 3 wt% to the treated seawater, and the supernatant liquid should be used as the paint solvent.

When the mixture/reaction product (C) is dissolved in water, there will be a residue which is left undissolved. It may be utilized as a raw material of the strong acid proposed by the present inventors (in Japanese Patent Laid-Open No. 172585/1989). Therefore, the process for the production of the strong acid may be combined with the process of the present invention so as to eliminate waste matter.

The invention will be described in more detail with reference to the following examples.

Examples 1 to 5

1. Separation of salt from seawater

Activated calcium phosphate was dissolved in water. To this aqueous solution was added concentrated sulfuric acid in an amount equal to 3-5% of the aqueous solution. After removal of precipitates, the resulting acid was added to seawater so as to adjust it to approximately pH 1.6. To the acidified seawater was added sodium hydroxide in an amount equal to 3 wt% of the seawater so as to adjust it to pH 13 or above. The alkalized seawater gave rise to salt (a). After separation of salt (a), the seawater was concentrated to about 10% of its original volume and the salt which had separated out upon concentration was removed. Thus there was obtained saline (b) having a pH of 13.5. The salt (a) and saline (b) were found by analysis to contain elements as shown in Tables 1 and 2, respectively.

Table 1

| Element | Content(wt%) | Element | Content(wt%) |
|---------|--------------|---------|--------------|
| Al | 0.014 | Ca | 6.8 |
| Fe | 0.021 | K | 0.30 |
| Mg | 29.6 | Na | 14.5 |
| Si | 0.060 | Sr | 0.11 |
| Zn | 0.012 | Cl | 13 |
| Br | 0.044 | S | 0.94 |

Table 2

| Element | Content(mg/kg) | Element | Content(mg/kg) |
|---------|----------------|---------|----------------|
| Ca | 13.2 | K | 3840 |
| Na | 14.8(%) | S | 7560 |
| Si | 2.32 | Sr | 0.04 |
| Li | 2.92 | | |

2. Production of paint solvent

2 kg of quick lime was mixed with 200 g of calcium phosphate obtained by calcining bones at a high temperature. 1.3 kg of the above-mentioned salt (a) was mixed with 700 cc of kerosene. The resulting mixtures were mixed and reacted with each other to give a mixture/reaction product (d). 1 kg of this mixture/reaction product (d) was further mixed and reacted with 1.5 liters of saline (b) and 2 kg of quick lime to give a mixture/reaction product (e). This mixture/reaction product (e) was added to water in an amount equal to about 10 wt% of the water. After mixing and stirring, the supernatant liquid was collected for use as the paint solvent. The mixture/reaction product (e) was found by analysis to contain elements as shown in Table 3.

Table 3

| Element | Content (mg/kg) | Element | Content(mg/kg) |
|---------|-----------------|---------|----------------|
| Ca | 37.4(%) | K | 2160 |
| Mg | 201 | Na | 7.59(%) |
| S | 8840 | Al | 1340 |
| B | 39.0 | Cr | 3.02 |
| Cu | 3.92 | Fe | 93.9 |
| Mn | 12.3 | Si | 27.2 |
| Sr | 598 | Zn | 12.5 |
| Li | 3.36 | | |

3. Examples of usage of the paint solvents

The paint solvents obtained as mentioned above were used for dilution of commercial oil-based paints, acrylic paints, and epoxy paints. The diluted paints were tested for viscosity, quick drying property, film hardness, and film gloss. The results were compared with those of the same paints diluted with a conventional paint solvent. The formulations of the paints are shown in Table 4.

Table 4

| Example No. | Paint | Paint solvent (wt%) | Thinner (wt%) | Hardener (wt%) | Lacquer thinner (wt%) |
|---|---|---|---|---|---|
| 1 | Oil paint 1 | 30 | 20 | - | - |
| (1) | Oil paint 1 | - | 2-3 | - | - |
| 2 | Oil paint 2 | 30 | 20 | - | - |
| (2) | Oil paint 2 | - | 2-3 | - | - |
| 3 | Acrylic paint | 10 | - | - | 2-3 |
| (3) | Acrylic paint | - | - | 10 | 2-3 |
| 4 | Epoxy paint A | 30 | - | - | 20 |
| (4) | Epoxy paint A | - | - | 30 | 2-3 |
| 5 | Epoxy paint B | 30 | - | - | 20 |
| (5) | Epoxy paint B | - | - | 30 | 2-3 |

Parentheses indicate Comparative Examples.

The oil-based paint used in Example 1 and Comparative Example 1 is synthetic resin paint 1 ("Atom Paint" made by Atom Kagaku Co., Ltd.). The oil-based paint used in Example 2 and Comparative Example 2 is synthetic resin paint 2 (for buildings, made by Nippon Paint Co., Ltd.). The sample in Examples 1 and 2 were superior in viscosity, quick drying property, film hardness, and film gloss to those in Comparative Examples 1 and 2.

The acrylic paint used in Example 3 and Comparative Example 3 is acrylic-urethane paint ("Superio" made by Nippon Paint Co., Ltd.). The sample in Example 3 was superior in viscosity, quick drying property, film hardness, and film gloss (except for application property) to that in comparative Example 3. In addition, the sample in Example 3 did not need any hardener at all.

The epoxy paint used in Example 4 and Comparative Example 4 is "Epikon" made by Chugoku Marine Paints Ltd., and the epoxy Paint used in Example 5 and Comparative Example 5 is "Epomarine" made by Kansai Paint Co,, Ltd. The samples in Examples 4 and 5 were superior in viscosity, quick drying property, film hardness, and film gloss, as well as acid resistance and heat resistance to those in Comparative Examples 4 and 5. The samples in Example 4 and 5 did not need any hardener at all, so that they were free from the offensive odor of hardener. In addition, they gave an adequate application property even when mixed with a comparatively large amount of lacquer thinner. This leads to a saving of the paint itself.

Example 6

3 kg of quick lime was mixed with 300 g of calcium phosphate obtained by calcining bones at high temperature. 2 kg of salt (a), which was obtained by separation from seawater in the same manner as in Example 1, was mixed with 1 kg of lard. The two mixtures were mixed and reacted with each other. To the resulting reaction product (1 kg) were added 2.5 kg of quick lime and 1.75 liters of saline (b) obtained from seawater. The resulting reaction product was diluted with water in an amount equal to 10 wt% of the reaction product. The supernatant liquid was collected for use as the paint solvent.

An oil-based paint ("Neoalkicoat" made by Kawakami Paint Mfg. Co., Ltd.) was diluted with this paint solvent (50 wt%) and thinner (10 wt%). The resulting sample was tested for application property, viscosity, quick drying property, film hardness, and film gloss. For comparison, the same paint as mentioned above was diluted with thinner (10 wt%) and the resulting sample was tested for the same items as mentioned above. The sample in this example was superior in all the items (except for application property) to that in the comparative example.

Example 7

2 kg of quick lime was mixed with 200 g of calcium phosphate obtained by calcining bones at a high temperature. 1.3 kg of salt (a), which was obtained by separation from seawater in the same manner as in Example 1, was mixed with 700 cc of kerosene. The two mixtures were mixed and reacted with each other to give a mixture/reaction product (d).

To 1 kg of this mixture/reaction product were added 2 kg of quick lime and 1.5 liters of saline (b) obtained from seawater in the same manner as in Example 1, to give a mixture/reaction product (e). The mixture/reaction product (e) was added (in an amount equal to 3 wt%) to seawater which had been acidified and then alkalized and separated from salt (a). The supernatant liquid was collected for use as the paint solvent.

An epoxy paint ("Hipon" made by Nippon Paint Co., Ltd.) was diluted with this paint solvent (30 wt%) and lacquer thinner (20 wt%). The resulting sample was tested for application property, viscosity, quick drying property, film hardness, and film gloss. For comparison, the same paint as mentioned above was diluted with lacquer thinner (3 wt%) and incorporated with a hardener (30 wt%). The resulting sample was tested for the same items as mentioned above. The sample in this example was superior in all the items to that in the comparative example, even though it was not incorporated with any hardener.

Example 8

1740 g of quick lime was mixed with 4 g of calcium phosphate obtained by calcining bones at a high temperature. One liter of saline (b), which was obtained from seawater in the same manner as in Example 1, was mixed with 260 g of salt (a) and 140 cc of kerosene. The two mixtures were mixed and reacted with each other. The resulting mixture/reaction product was mixed with water in an amount equal to 10 wt% of the product. The supernatant liquid was collected for use as the paint solvent.

An enamel paint ("Platinite" made by Kansai Paint Co., Ltd.) was diluted with this paint solvent (30 wt%). The resulting sample was compared with a solvent-free sample for application property, viscosity, quick drying property, film hardness, and film gloss. The sample in this example was superior in all the items (except for application property) to the comparative sample.

Effect of the Invention

As demonstrated in the foregoing examples, the paint solvent of the present invention can be used for a variety of paints. It minimizes the use of organic solvents undesirable from the environmental point of view. It can be used in combination with an organic solvent without any adverse effect on the viscosity of paint. Therefore, it permits paints to be diluted to a desired concentration and hence it makes it possible to reduce the amount of paint required while maintaining adequate film hardness and gloss. In addition, it can be produced from salt of seawater, quick lime, kerosene, etc. which are readily available; therefore, it can be produced easily in inland areas where the transportation of seawater is difficult.

**Claims**

1. A paint solvent which comprises an aqueous solution obtainable by dissolving in water a mixture which is a reaction product of salt obtained from seawater, a calcium compound composed mainly of calcium oxide, and an oily substance.

2. A process for producing a paint solvent which comprises treating seawater with an acid containing sulfate ions, thereby lowering the pH of the seawater, treating the low-pH seawater with an alkali such as sodium hydroxide, thereby raising the pH of the seawater and causing salt to precipitate, separating the salt and concentrating the remaining seawater to give concentrated high-pH saline, mixing and reacting the salt with a calcium compound composed mainly of calcium oxide and an oily substance, reacting the reaction mixture with said concentrated high-pH saline and calcium compound, and dissolving the reaction product in water.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A,D | US-A-4 956 157 (NASU,A.) <br> * claims 1-3 * <br><br> ----- | 1,2 | C09D7/00 |
| | | | **TECHNICAL FIELDS SEARCHED (Int. Cl.5 )** |
| | | | C09D |

The present search report has been drawn up for all claims

| Place of search | Date of completion of the search | Examiner |
|---|---|---|
| THE HAGUE | 13 AUGUST 1992 | BEYSS E. |

EPO FORM 1503 03.82 (P0401)